# EUROPÄISCHE PATENTSCHRIFT

(11) **EP 0 823 626 B1**
(45) Veröffentlichungstag und Bekanntmachung des Hinweises auf die Patenterteilung: **13.10.2004**
(21) Anmeldenummer: 97110905.3
(22) Anmeldetag: 02.07.1997
(51) Int. Cl.: G01N 15/02

(54) **Vorrichtung und Verfahren zum Messen eines Teilchenstromes in einem Fluid**
Device and method for measuring particle fluxes in a fluid
Dispositif et méthode pour la mesure de courants de particules dans un fluide

(30) Priorität: 12.07.1996 DE 19628156
(43) Veröffentlichungstag der Anmeldung: 11.02.1998
(73) Patentinhaber: Palas GmbH Partikel-und Lasermesstechnik, 76229 Karlsruhe (DE)
(72) Erfinder: Mölter, Leander, 76744 Wörth (DE); Munzinger, Friedrich, 75053 Gondelsheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 1 802 269
- DE-A- 3 315 456
- DE-A- 3 925 148

## Beschreibung

Die Erfindung betrifft eine Vorrichtung zur Messung eines Teilchenstroms in einem Fluid mit mindestens einer eine Blende aufweisenden Beleuchtungsanordnung und mit mindestens einer eine Blende aufweisenden Empfängeranordnung und ein Verfahren zum Messen eines Teilchenstroms in einem Fluid, wobei der Teilchenstrom beleuchtet und unter einem endlichen Winkel zur Beleuchtungsrichtung von Teilchen gestreutes Licht detektiert wird.

Eine solche Vorrichtung ist z.B. aus DE-A-39 25 148 bekannt.

Bei einem zu messenden Teilchenstrom in einem Fluid kann es sich um Feststoff oder Flüssigkeitsteilchen in einem Gas oder in einer Flüssigkeit handeln. Derartige Messungen werden durchgeführt, um in der Regel die Teilchengrößenverteilung und die Teilchenkonzentration im Fluid zu bestimmen. Die Teilchengröße ist proportional zur von einem Teilchen auf einen Empfänger gestreuten Lichtintensität, die Konzentration wird über die Zählimpulse bestimmt. Insbesondere bei der Bestimmung der Teilchengröße kann es zu Fehlern kommen, wenn Teilchen, die teilweise sich im optischen Meßvolumen befinden, teilweise außerhalb desselben aus diesem Grunde auf den Empfänger nur eine geringere Lichtintensität streuen, als es ihrer Größe entspricht. Derartige Fehler müssen ausgeschlossen werden. Dies wurde bisher dadurch getan, daß das gestreute Licht durch zwei Detektoranordnungen mittels Koinzidenzmessungen erfaßt wurde, wobei die Detektoranordnungen Blendenöffnungen unterschiedlicher Größe aufwiesen. Hierdurch ist ein hoher apparativer Aufwand notwendig. Darüber hinaus kann eine solche Messung zu Fehlern führen, wenn die Teilchen nicht gleichmäßig streuen.

Der Erfindung liegt daher die Aufgabe zugrunde, eine Vorrichtung und ein Verfahren anzugeben, mit denen unter Vermeidung der genannten Fehler genaue Messungen mit geringerem apparativem Aufwand erzielbar sind.

Erfindungsgemäß wird die genannte Aufgabe bei einer Vorrichtung der eingangs genannten Art dadurch gelöst, daß mindestens eine Blende eine Blendenöffnung mit einem in der Ebene der Blendenöffnung zum Inneren der Blendenöffnung hin konvex ausgebildeten Rand oder mit einem in der Ebene der Blendenöffnung stufenförmig ausgebildeten Rand aufweist. Ein erfindungsgemäßes Verfahren sieht zur Lösung der Aufgabe vor, daß der Teilchenstrom durch eine Blendenöffnung mit zu ihrem Inneren hin konvex ausgebildetem Rand beleuchtet und/oder betrachtet wird, daß die Maximalintensität des durch einen ersten optischen Meßbereich fliegenden Teilchens gemessen und das Teilchen nur berücksichtigt wird, wenn die Intensität beim Durchfliegen durch einen zweiten Meßbereich einen bestimmten Mindestprozentsatz der für dieses Teilchen gemessenen Maximalintensität überschreitet.

Durch die mit einem zum Inneren hin konvexen Rand versehene Blendenöffnung wird die Blende in zwei oder mehr Bereiche unterteilt, durch die bei der Abbildung der Blende in den Teilchenstrom unterschiedliche Meßbereiche definiert werden. Ein nahe dem Rand des breiteren Blendenbereichs bzw. breiteren Meßbereichs hindurchfliegendes Teilchen wird außerhalb des schmäleren Blendenbereichs bzw. des hierdurch bedingten Meßbereichs bleiben und daher in diesem Bereich nicht mehr erfaßt werden. Der Streulichtimpuls eines solchen Teilchens wird eine geringere Zeitdauer haben als der eines mittig durch die Blende fliegenden Teilchens. Das erstgenannte Teilchen kann daher bei der Messung ausgeschlossen werden, was in der durch das genannte Verfahren gekennzeichneten Weise geschieht.

Hierdurch können mit einer Empfängeranordnung (und einer Beleuchtungsanordnung) Randfehler ausgeschlossen werden und damit der apparative Aufwand zur fehlerfreien Messung eines Teilchenstroms in einem Fluid reduziert werden.

In einer bevorzugten Ausgestaltung ist vorgesehen, daß der Rand stufenförmig ausgebildet ist, wobei die Blendenöffnung T-förmig ausgebildet ist oder aber die Blendenöffnung H-förmig ausgebildet ist. Im erstgenannten Falle sehen Weiterbildungen vor, daß die Länge des T-Schenkels gleich der Stärke des T-Querstegs ist und daß der T-Schenkel in Strömungsrichtung des Teilchenstroms ausgerichtet ist. Im zweitgenannten Falle kann vorgesehen sein, daß die Länge des die H-Schenkel verbindenden H-Querstegs gleich der Stärke der H-Längsschenkel ist oder daß die Länge des die H-Schenkel verbindenden H-Querstegs gleich dem Doppelten der Stärke der H-Längsschenkel ist, wobei jeweils der H-Quersteg in Strömungsrichtung des Teilchenstromes ausgerichtet ist.

Weitere bevorzugte Ausbildungen der erfindungsgemäßen Vorrichtung sehen vor, daß sowohl die Blendenöffnung der Abbildungsanordnung als auch die Blendenöffnung der Empfängeranordnung mit konvexen Rändern ausgebildet ist und daß eine Blende zwei Blendenöffnungen unterschiedlicher Abmessungen aufweist. Die Blendenöffnungen sollen scharfkantig und gratfrei ausgebildet sein.

Das erfindungsgemäße Verfahren sieht in Weiterbildung vor, daß als zweiter Meßwert die Teilchenintensität nach einem Zeitraum von etwa der mittleren Durchströmungszeit des Teilchens durch den ersten optischen Meßbereich nach der Feststellung der Maximalintensität bestimmt wird, wobei insbesondere lediglich Teilchen erfaßt werden, die bei Durchströmen durch den zweiten optischen Meßbereich eine relative Signalintensität von mindestens 20 % der gemessenen Maximalintensität ergeben.

Weitere Vorteile und Merkmale der Erfindung ergeben sich aus den Ansprüchen und aus der nachfolgenden Beschreibung, in der Ausführungsbeispiele unter Bezugnahme auf die Figuren im einzelnen erläutert sind. Dabei zeigt:
- Fig. 1: eine schematische Darstellung einer erfindungsgemäßen Vorrichtung;
- Fig. 2: die erfindungsgemäß eingesetzten Blenden und das durch diese optisch gebildete Meßvolumen in Projektion;
- Fig. 3: das erfindungsgemäß gebildete Meßvolumen in perspektivischer Darstellung;
- Fig. 4: Signalverläufe von mittels der erfindungsgemäßen Vorrichtung detektierten Teilchen;
- Fig. 5a-5c: andere Ausgestaltungen erfindungsgemäßer Blendenöffnungen;
- Fig. 6: die Ausgestaltung einer erfindungsgemäßen Doppelblende; und
- Fig. 7a-7c: weitere Ausgestaltungen erfindungsgemäßer Blendenöffnungen.

Zur Messung eines Teilchenstroms in einem Fluid, wie zur Messung eines Aerosols, erfolgt eine Beleuchtung des Teilchenstroms durch eine Beleuchtungsanordnung 2 mit einer Lichtquelle 3, die vorzugsweise eine Quelle weißen Lichtes ist, einem Kondensorsystem 4, einer Blendenöffnung 6 in einer Blende 6a und einer Abbildungsoptik 7. Die Betrachtung des Teilchenstroms erfolgt über eine Empfängeranordnung 8 mit einer Abbildungsoptik 9 einer weiteren Blendenöffnung 11 in einer weiteren Blende 11a, einem weiteren Kondensorsystem 12 und einem optoelektrischen Empfänger 13. Im dargestellten Ausführungsbeispiel ist zur Parallelanordnung von Lichtquelle und Empfänger noch ein Umlenkspiegel 10 vorgesehen, der aber nicht notwendig ist. Das vom Empfänger 13 gelieferte Signal wird in einer anschließenden Elektronik verarbeitet.

Die Abbildungsoptik 9 der Empfängeranordnung 8 ist derart, daß sie die Blendenöffnung 11 dorthin abbildet, wo die Abbildungsoptik 7 die Blendenöffnung 6 in den Teilchenstrom abbildet. Es wird damit optisch ein Meßvolumen 16 im Kreuzungsbereich des Beleuchtungsstrahlenganges 17 und des Empfängerstrahlenganges 18 innerhalb des Teilchenstromes gebildet.

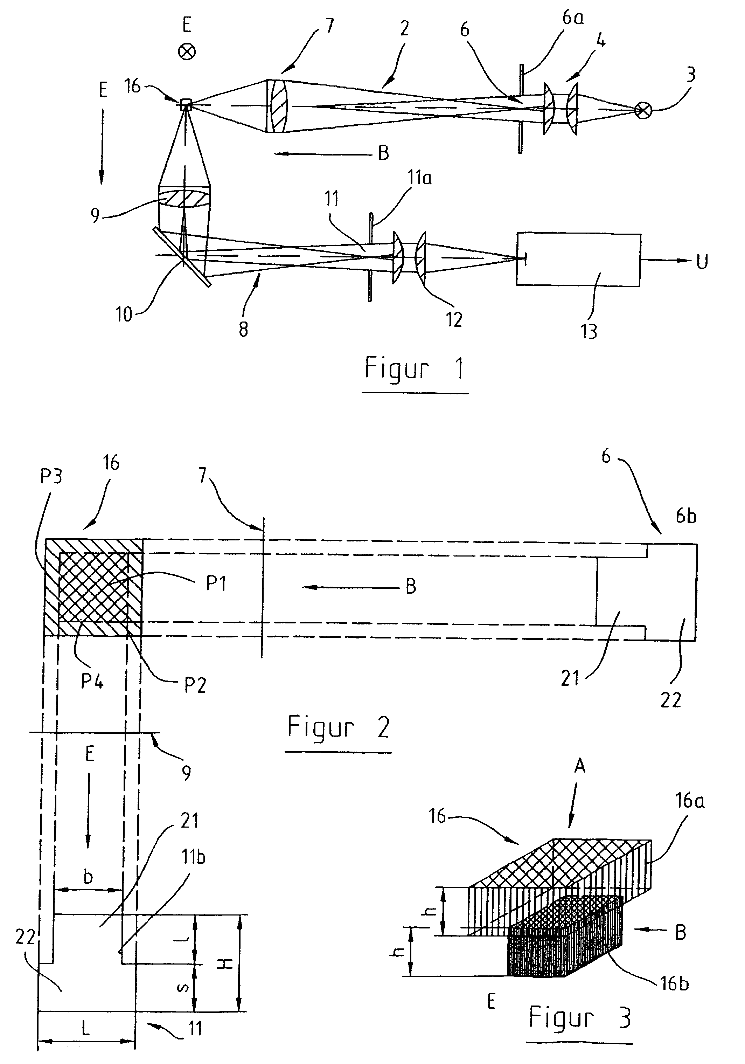

Der Teilchenstrom fließt in der Regel senkrecht durch die durch die Beleuchtungs- und Empfängerstrahlengänge 17, 18 gebildete Ebene, also in der Darstellung der Fig. 1 senkrecht zur Blattebene.

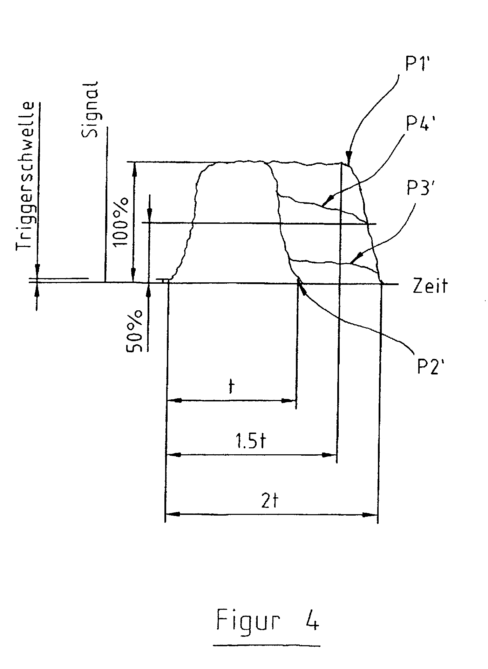

Erfindungsgemäß sind die Blendenöffnungen 6, 11 aber mit zum Inneren der Blendenöffnungen 6, 11 hin gerichteten konvexen Rändern bzw. Kanten ausgebildet. Die Konvexität wird in allen dargestellten Ausführungsbeispielen durch Stufen oder Schultern der Umrandung der Blendenöffnung erreicht. Im dargestellten Ausführungsbeispiel bilden die Blendenöffnungen 6, 11 jeweils ein T, wie dies aus der Fig. 2 ersichtlich ist, wo zur Verdeutlichung die Blendenöffnungen 6, 11 allerdings in die Strahlenebene 17, 18 umgeklappt bzw. projiziert sind. Die Beleuchtungsrichtung ist hier, wie auch in Fig. 3, mit B, die Empfangslichtstrahlrichtung mit E und die Teilchenströmung mit A bezeichnet.

Die T-förmigen Blendenöffnungen 6, 11 weisen einen T-Längsschenkel 21 und einen T-Quersteg 22 auf. Die Länge 1 des T-Längsschenkels stimmt im dargestellten Ausführungsbeispiel mit der Stärke s des T-Querstegs 22 überein. Die absoluten Gesamtabmessungen der Blendenöffnungen 6, 11 werden durch die Abbildungsanordnung, das gewünschte Meßvolumen sowie die Genauigkeit der Bearbeitungsmöglichkeit der Blenden und Blendenöffnungen bestimmt, da diese möglichst scharfkantig und mit scharfen Ecken sowie gratfrei hergestellt werden sollten. Die linearen Gesamtabmessungen liegen beispielsweise etwa in der Größenordnung von 0,5 mm. In einem konkreten Ausführungsbeispiel beträgt die Länge des T-Längsschenkels 1 = 0,250 mm, die Stärke des T-Querstegs ebenfalls s = 0,250 mm, die Gesamthöhe der Blendenöffnungen 6, 11 damit H = 0,5 mm, die Breite des T-Längsschenkels ebenfalls b = 0,500 mm und die Länge des T-Querstegs L = 0,650 mm. Die Dicke des Blendenmaterials beträgt ca. 50 µm.

Durch die beiden in der Fig. 2 dargestellten T-förmigen Blendenöffnungen 6, 11 wird das in der Fig. 3 dargestellte Meßvolumen 16 optisch gebildet, das die Form eines quadratischen Pilzes hat und zwei in Strömungsrichtung A des Teilchenstroms 1 aufeinanderfolgende Meßbereiche 16a, 16b aufweist, die unterschiedliche Querschnittsflächen senkrecht zur Strömungsrichtung A des Teilchenstroms 1 haben (also mit parallel zu A gegebener Flächennormalen), im dargestellten Ausführungsbeispiel aber in Strömungsrichtung gleiche Höhen h entsprechend den übereinstimmenden Werten l und s der Blendenöffnungen 6, 11.

Fliegt nun ein Teilchen P1 auf einer Bahn, so daß es durch beide Meßbereiche 16a, 16b hindurchtritt (Fig. 2), so streut es von seiner Größe abhängige Lichtintensität sowohl während der Zeit t, während der es durch den Meßbereich 16a fliegt, als auch während der Zeit, während der es durch den Meßbereich 16b fliegt, und liefert damit im Empfänger 13 das in der Fig. 4 mit P1 bezeichnete Signal, das über die gesamte Durchflugszeit 2t des Teilchens P1 durch das gesamte Meßvolumen 16 in etwa gleich groß ist.

Ein Teilchen P2, das in einem Randabschnitt des Meßbereiches 16a durch diesen hindurchtritt, liefert nur während der Zeit t, während der es sich im Meßbereich 16a befindet, ein seiner Größe entsprechendes Signal, während es nach Austreten aus dem Meßbereich 16a nicht mehr durch den kleineren Meßbereich 16b, sondern an diesem vorbei fliegt und daher auf dieses Teilchen in der Flughöhe des Meßbereichs 16b kein Licht fällt, es damit auch kein Licht in den Empfänger 13 streuen kann, so daß es lediglich während der Zeit t ein Streulichtsignal P2' (Fig. 4) liefert.

Ein Teilchen P3, das bei seinem Weg durch das Meßvolumen 16 den Meßbereich 16b nur mit einem geringen Bereich seines Volumens tangiert bzw. in diesen Bereich eintritt, während der Schwerpunkt des Teilchens P3 außerhalb des Meßbereichs 16b liegt, wird damit auch nur auf seinem kleinen, in den Meßbereich 16b ragenden Oberflächenanteil beleuchtet und kann nur mit diesem geringen Anteil Licht in den Empfänger 13 streuen, so daß der Empfänger das gesamte, der Teilchengröße entsprechende Signal nur beim Durchgang durch den ersten Meßbereich 16a über die Zeit t, nachfolgend aber ein wesentlich geringeres Signal enthält, wie es insgesamt mit P3' in der Fig. 4 dargestellt ist. Gegenüber dem durch die Teilchengröße bestimmten Maximalsignal während der Durchlaufzeit t (entsprechend dem Meßbereich 16a) beträgt die Signalintensität beim Durchflug durch den Meßbereich 16b nur noch ca. 20 %, wie der Fig. 4 zu entnehmen ist.

Ein Teilchen P 4, das mit seinem größten Teil sowohl durch den Meßbereich 16a als auch durch den Meßbereich 16b fliegt, aber am Rande des letzteren derart, daß ein geringer Oberflächenanteil des Teilchens außerhalb des Meßbereichs 16b liegt, wird auch beim Durchfliegen des Meßbereichs 16b noch ein relativ großes Signal im Verhältnis zu dem durch seine Größe bestimmten Maximalsignal bewirken. Ein Signal eines solchen Teilchens ist in Fig. 4 mit P4' bezeichnet.

Um nun die Verfälschung der Meßergebnisse, insbesondere der Partikelgrößenverteilung durch Teilchen, die aufgrund des Umstands, daß ein Teil ihrer Oberfläche außerhalb des Meßvolumens liegt, zu vermeiden, werden nur die Teilchen mit ihrer während der Zeit t (Durchflug durch den Meßbereich 16a) empfangenen Maximalintensität (100 %) gezählt, die beim Hindurchfliegen durch den Meßbereich 16b eine Signalintensität oberhalb einer vorzugebenden Schwelle, die im dargestellten Ausführungsbeispiel der Fig. 4 mit 50 % der Maximallichtintensität angegeben ist, detektiert, während Teilchen, die während des Durchströmens durch den Meßbereich 16b eine geringere relative Signalintensität liefern, für die Messung verworfen werden. Im dargestellten Ausführungsbeispiel werden zur Messung lediglich die Teilchen P1 und P4 herangezogen, während die Teilchen P2 und P3 verworfen werden.

Die Minimalschwelle S ist abhängig von der Teilchengröße relativ zum Meßvolumen. Im dargestellten Ausführungsbeispiel könnte die Schwelle S auch tiefer als 50 % der jeweiligen Maximalintensität gelegt werden. Die Teilchen können aber Querschnittsabmessungen aufweisen, die abweichend von der Darstellung der Fig. 2 in der Größenordnung der Abmessungen des Meßvolumens liegen und beispielsweise nur ein Fünftel bis ein Zehntel der Abmessungen des Meßvolumens betragen. In diesem Falle sind auf jeden Fall von der Zählung solche Teilchen auszuschließen, bei denen auch nur ein geringer Abschnitt über den Rand des Meßbereichs 16a herausragt.

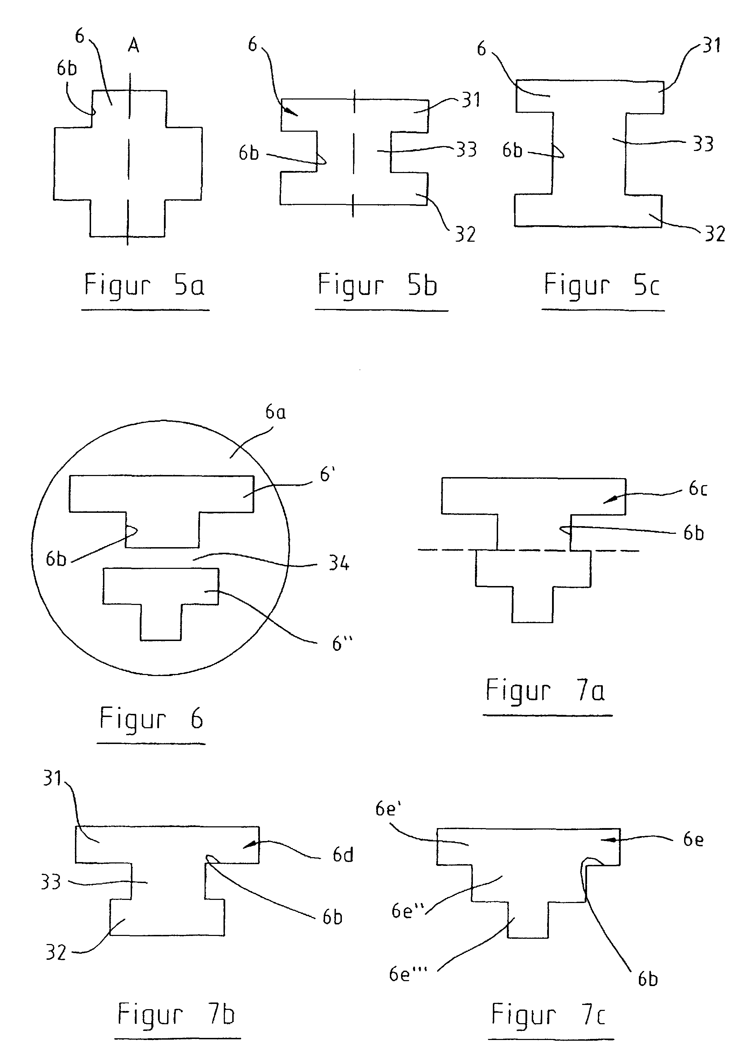

Weitere bevorzugte Ausgestaltungen von erfindungsgemäßen Blenden sind in den Fig. 5 bis 7 dargestellt. Die Fig. 5a zeigt eine kreuzförmige Blendenöffnung. Die Fig. 5b zeigt eine H-förmige Blendenöffnung, wobei der die H-Schenkel 31, 32 verbindende H-Steg 33 in Erstreckungsrichtung A der Teilchenströmung ausgerichtet ist. Die Stärke S' der H-Schenkel 31, 32 entspricht der Länge 1' des H-Stegs 33. Auch die Abbildung 5c zeigt eine H-förmige Blendenöffnung. Hier entspricht allerdings die Länge 1' des Stegs 33 dem Doppelten der Stärke S' der H-Schenkel 31, 32.

Die Fig. 6 zeigt in einer Blende 6a zwei in Strömungsrichtung A übereinander angeordnete T-förmige Blendenöffnungen 6', 6''. Hierdurch werden bei gleicher Abbildungsoptik (mit der beide Blendenöffnungen 6', 6'' in die Partikelströmung zur Bildung des Meßvolumens abgebildet werden) unterschiedlich große Meßvolumen gebildet, wodurch der Dynamikbereich, d.h. der Bereich der Konzentrationen, die mit einer entsprechenden erfindungsgemäß ausgebildeten Vorrichtung gemessen werden können, vergrößert werden kann.

Grundsätzlich kann der Materialsteg 34 zwischen den beiden Blendenöffnungen 6', 6'' auch fortgelassen werden, wodurch dann eine Blendenöffnung 6c entsprechend der Fig. 7a gebildet wird, während verschiedene Bereiche ebenfalls einerseits zum Ausscheiden unerwünschter Teilchen aus der Zählung und zum anderen zur Erhöhung des Dynamikbereiches genutzt werden können. Grundsätzlich kann die Blendenöffnung der Ausgestaltung der Fig. 7a auch in der Weise der Fig. 7b erfolgen, also die Blendenöffnung 6d ein H mit unterschiedlich langen Schenkeln 31, 32 bilden.

Ggf. kann die Vereinfachung der Blendenöffnung 6c auch zu der Blendenöffnung 6e geschehen, wie sie in Fig. 7c dargestellt ist. Hier werden bei geringen Teilchenkonzentrationen zur Messung die Blendenöffnungsbereiche 6e' und 6e'', bei hohen Teilchenkonzentrationen die Blendenöffnungsbereiche 6e" und 6e''' zur Entscheidung darüber herangezogen, ob ein Teilchen zu zählen oder auszuscheiden ist.

## Patentansprüche

1. Vorrichtung zur Messung eines Teilchenstroms in einem Fluid mit mindestens einer eine Blende aufweisenden Beleuchtungsanordnung und mit mindestens einer eine Blende aufweisenden Empfängeranordnung, **dadurch gekennzeichnet, daß** mindestens eine Blende (6a, 11a) eine Blendenöffnung (6, 11, 6', 6", 6c, 6d, 6e) mit einem in der Ebene der Blendenöffnung (6, 11, 6', 6", 6c, 6d, 6e) zum Inneren der Blendenöffnung (6, 11, 6', 6", 6c, 6d, 6e) hin konvex ausgebildeten Rand (6b, 11b) oder mit einem in der Ebene der Blendenöffnung (6, 11, 6', 6", 6c, 6d, 6e) stufenförmig ausgebildeten Rand (6b, 11b) aufweist.

2. Vorrichtung nach Anspruch 1, **dadurch gekennzeichnet, daß** der Rand (6b) in der Ebene der Blendenöffnung (6, 11, 6', 6", 6c, 6d, 6e) stufenförmig ausgebildet ist.

3. Vorrichtung nach Anspruch 1 oder 2, **dadurch gekennzeichnet, daß** die Blendenöffnung (6, 11) T-förmig ausgebildet ist.

4. Vorrichtung nach Anspruch 3, **dadurch gekennzeichnet, daß** die Länge (l) des T-Schenkels (21) gleich der Stärke (s) des T-Querstegs (22) ist.

5. Vorrichtung nach Anspruch 3 oder 4, **dadurch gekennzeichnet, daß** der T-Schenkel (21) in Strömungsrichtung (A) des Teilchenstroms ausgerichtet ist.

6. Vorrichtung nach Anspruch 1 oder 2, **dadurch gekennzeichnet, daß** die Blendenöffnung (6, 11) H-förmig ausgebildet ist.

7. Vorrichtung nach Anspruch 6, **dadurch gekennzeichnet, daß** die Länge (l') des die H-Schenkel verbindenden H-Querstegs gleich der Stärke (S') der H-Längsschenkel ist.

8. Vorrichtung nach Anspruch 6, **dadurch gekennzeichnet, daß** die Länge (l') des die H-Schenkel verbindenden H-Querstegs gleich dem Doppelten der Stärke (S') der H-Längsschenkel ist.

9. Vorrichtung nach einem der vorangehenden Ansprüche, **dadurch gekennzeichnet, daß** sowohl die Blendenöffnung der Abbildungsanordnung (2) als auch die Blendenöffnung (11) der Empfängeranordnung (8) mit konvexen Rändern (6b, 11b) ausgebildet ist.

10. Vorrichtung nach einem der vorangehenden Ansprüche, **dadurch gekennzeichnet, daß** eine Blende (6) zwei Blendenöffnungen (6', 6'') unterschiedlicher Abmessungen aufweist.

11. Vorrichtung nach einem der vorangehenden Ansprüche, **dadurch gekennzeichnet, daß** die Ränder (6b, 11b) der Blendenöffnungen scharfkantig sind.

12. Vorrichtung nach einem der vorangehenden Ansprüche, **dadurch gekennzeichnet, daß** die Ränder (6b, 11b) der Blendenöffnungen (6, 11) gratfrei sind.

13. Verfahren zum Messen eines Teilchenstroms in einem Fluid, wobei der Teilchenstrom beleuchtet und unter einem endlichen Winkel zur Beleuchtungsrichtung von Teilchen gestreutes Licht detektiert wird, **dadurch gekennzeichnet, daß** der Teilchenstrom durch eine Blendenöffnung beleuchtet und/oder betrachtet wird, die einen Rand (6b, 11b) aufweist, der in der Ebene der Blendenöffnung (6, 11, 6', 6", 6c, 6d, 6e) zum Innern der Blendenöffnung (6, 11, 6', 6", 6c, 6d, 6e) hin konvex ausgebildet ist oder der in der Ebene der Blendenöffnung (6, 11, 6', 6", 6c, 6d, 6e) stufenförmig ausgebildet ist, daß die Maximalintensität des durch einen ersten optischen Meßbereich fliegenden Teilchens gemessen und das Teilchen nur berücksichtigt wird, wenn die Intensität beim Durchfliegen durch einen zweiten Meßbereich einen bestimmten Mindestprozentsatz der für dieses Teilchen gemessenen Maximalintensität überschreitet.

14. Verfahren nach Anspruch 13, **dadurch gekennzeichnet, daß** als zweiter Meßwert die Teilchenintensität nach einem Zeitraum von etwa der mittleren Durchströmungszeit des Teilchens durch den ersten optischen Meßbereich nach der Feststellung der Maximalintensität bestimmt wird.

15. Verfahren nach Anspruch 13 oder 14, **dadurch gekennzeichnet, daß** lediglich Teilchen erfaßt werden, die bei Durchströmen durch den zweiten optischen Meßbereich eine relative Signalintensität von mindestens 20 % der gemessenen Maximalintensität ergeben.

## Claims

1. Device for measuring a particle flow in a fluid with at least one illumination system having a diaphragm and with at least one receiver system having a diaphragm, **characterized in that** at least one diaphragm (6a, 11a) has a diaphragm aperture (6, 11, 6', 6", 6c, 6d, 6e) with an edge (6b, 11b) in the plane of the diaphragm aperture (6, 11, 6', 6", 6c, 6d, 6e) constructed convexly towards the interior of the diaphragm aperture (6, 11, 6', 6", 6c, 6d, 6e) or with an edge (6b, 11b) constructed steplike in the plane of the diaphragm aperture (6, 11, 6', 6", 6c, 6d, 6e).

2. Device according to claim 1, **characterized in that** the edge (6b) is steplike in the plane of the diaphragm aperture (6, 11, 6', 6", 6c, 6d, 6e).

3. Device according to claim 1 or 2, **characterized in that** the diaphragm aperture (6, 11) is T-shaped.

4. Device according to claim 3, **characterized in that** the length (l) of the T-leg (21) is equal to the thickness (s) of the T-crossbar (22).

5. Device according to claim 3, **characterized in that** the T-leg (21) is directed in the flow direction (A) of the particle flow.

6. Device according to claim 1 or 2, **characterized in that** the diaphragm aperture (6, 11) is H-shaped.

7. Device according to claim 6, **characterized in that** the length (l') of the H-crossbar linking the H-legs is the same as the thickness (s') of the H-longitudinal leg.

8. Device according to claim 6, **characterized in that** the length of the H-crossbar connecting the H-legs is twice the thickness (s') of the H-longitudinal leg.

9. Device according to claim 1 or 2, **characterized in that** both the diaphragm aperture of the imaging system (2) and the diaphragm aperture (11) of the receiver system (8) is constructed with convex edges (6b, 11b).

10. Device according to claim 1 or 2, **characterized in that** a diaphragm (6) has two diaphragm apertures (6', 6") with different dimensions.

11. Device according to claim 1 or 2, **characterized in that** the edges (6b, 11b) of the diaphragm apertures are sharp.

12. Device according to claim 1 or 2, **characterized in that** the edges (6b, 11b) of the diaphragm apertures (6, 11) are free from burrs.

13. Method for measuring a particle flow in a fluid, the particle flow being illuminated and under a finite angle to the illumination direction light scattered by the particles is detected, **characterized in that** the particle flow is illuminated and/or observed through a diaphragm aperture having an edge (6b, 11b), which is convexly constructed towards the interior of the diaphragm aperture (6, 11, 6', 6", 6c, 6d, 6e) in the plane of said diaphragm aperture (6, 11, 6', 6", 6c, 6d, 6e) or which is constructed steplike in the plane of the diaphragm aperture (6, 11, 6', 6", 6c, 6d, 6e), that the maximum intensity of the particles flying through a first optical measuring range is measured and the particles are only taken into account if the intensity on flying through a second measuring range exceeds a given minimum percentage of the maximum intensity measured for these particles.

14. Method according to claim 13, **characterized in that** as the second measured value determination takes place of the particle intensity after a time period of approximately the average through-flow time of the particle through the first optical measuring range following the determination of the maximum intensity.

15. Method according to claim 13 or 14, **characterized in that** only those particles are detected which, on flowing through the second optical measuring range, give a relative signal intensity of at least 20% of the measured maximum intensity.

## Revendications

1. Dispositif de mesure d'un courant de particules dans un fluide comprenant au moins une installation d'éclairage présentant un diaphragme et au moins un ensemble de réception présentant un diaphragme, **caractérisé en ce qu'**au moins un diaphragme (6a, 11a) présente une ouverture de diaphragme (6,11,6',6",6c,6d,6e) comportant un bord (6b, 11b) dans le plan d'ouverture du diaphragme (6,11,6',6",6c,6d,6e) conformé convexe vers l'intérieur de l'ouverture du diaphragme (6,11,6',6",6c,6d,6e) ou comportant un bord étagé (6b, 11b) dans le plan d'ouverture du diaphragme (6,11,6',6",6c,6d,6e).

2. Dispositif selon la revendication 1, **caractérisé en ce que** le bord (6b) dans le plan d'ouverture du diaphragme (6,11,6',6",6c,6d,6e) est étagé.

3. Dispositif selon la revendication 1 ou 2, **caractérisé en ce que** l'ouverture du diaphragme (6, 11) est conformée en T.

4. Dispositif selon la revendication 3, **caractérisé en ce que** la longueur (l) de la branche (21) de la pièce en T est égale à l'épaisseur (s) de la tige transversale en T (22).

5. Dispositif selon la revendication 3 ou 4, **caractérisé en ce que** la branche (21) de la pièce en T est dirigée dans le sens d'écoulement (A) du courant de particules.

6. Dispositif selon la revendication 1 ou 2, **caractérisé en ce que** l'ouverture du diaphragme (6, 11) est conformée en H.

7. Dispositif selon la revendication 6, **caractérisé en ce que** la longueur (l') de la tige transversale en H reliant les branches de la pièce en H est égale à l'épaisseur (s') des branches longitudinales de la pièce en H.

8. Dispositif selon la revendication 6, **caractérisé en ce que** la longueur (l') de la tige transversale en H reliant les branches de la pièce en H est égale au double de l'épaisseur (s') des branches longitudinales de la pièce en H.

9. Dispositif selon l'une quelconque des revendications précédentes, **caractérisé en ce qu'**aussi bien l'ouverture du diaphragme de l'ensemble de projection (2) que l'ouverture du diaphragme (11) de l'ensemble de réception (8) présentent des bords (6b, 11b) convexes.

10. Dispositif selon l'une quelconque des revendications précédentes, **caractérisé en ce qu'**un diaphragme (6) présente deux ouvertures de diaphragme (6', 6") de dimensions différentes.

11. Dispositif selon l'une quelconque des revendications précédentes, **caractérisé en ce que** les bords (6b, 11b) des ouvertures de diaphragme sont à arêtes vives.

12. Dispositif selon l'une quelconque des revendications précédentes, **caractérisé en ce que** les bords (6b, 11b) des ouvertures de diaphragme (6, 11) sont sans bavure.

13. Procédé de mesure d'un courant de particules dans un fluide dans lequel on éclaire le courant de particules et dans lequel on détecte la lumière dispersée par des particules sous un angle fini par rapport à la direction d'éclairage, **caractérisé en ce que** le courant de particules est éclairé et/ou observé à travers une ouverture de diaphragme, présentant un bord (6b, 11b) dans le plan de l'ouverture du diaphragme (6,11,6',6",6c,6d,6e) conformé convexe vers l'intérieur de l'ouverture du diaphragme (6,11,6',6",6c,6d,6e) ou comportant un bord étagé (6b, 11b) dans le plan du diaphragme (6,11,6',6",6c,6d,6e), **en ce que** l'on mesure l'intensité maximale d'une particule volant à travers une première zone optique de mesure et **en ce que** la particule n'est prise en compte que si l'intensité au cours de son passage à travers une deuxième zone de mesure dépasse un pourcentage minimum défini de l'intensité maximale mesurée pour cette particule.

14. Procédé selon la revendication 13, **caractérisé en ce que** l'on définit, comme deuxième valeur de mesure, l'intensité de la particule après une durée d'environ la durée de passage moyenne de la particule à travers la première zone optique de mesure après détermination de l'intensité maximale.

15. Procédé selon la revendication 13 ou 14, **caractérisé en ce que** l'on ne détecte que des particules produisant lors du passage à travers la deuxième zone optique de mesure une intensité de signal relative correspondant à au moins 20 % de l'intensité maximale mesurée.
